# EUROPÄISCHE PATENTSCHRIFT

(11) **EP 1 799 977 B1**
(45) Veröffentlichungstag und Bekanntmachung des Hinweises auf die Patenterteilung: **20.02.2008**
(21) Anmeldenummer: 05804896.8
(22) Anmeldetag: 01.09.2005
(51) Int. Cl.: F01N 3/021, B01D 53/94, F01N 3/035

(54) **ABGASSYSTEM FÜR EINE BRENNKRAFTMASCHINE, SOWIE VERFAHREN ZUM BETREIBEN EINES SOLCHEN ABGASSYSTEMS**
EXHAUST GAS SYSTEM FOR AN INTERNAL COMBUSTION ENGINE AND METHOD FOR THE OPERATION OF SUCH AN EXHAUST GAS SYSTEM
SYSTEME D'ECHAPPEMENT POUR MOTEUR A COMBUSTION INTERNE, ET PROCEDE POUR FAIRE FONCTIONNER CE SYSTEME D'ECHAPPEMENT

(30) Priorität: 05.10.2004 DE 102004048313
(43) Veröffentlichungstag der Anmeldung: 27.06.2007
(73) Patentinhaber: ROBERT BOSCH GMBH, 70442 Stuttgart (DE)
(72) Erfinder: WIDENMEYER, Markus, 71101 Schoenaich (DE)
(86) Internationale Anmeldenummer: PCT/EP2005/054295
(87) Internationale Veröffentlichungsnummer: WO 2006/037703

(56) Entgegenhaltungen:
- EP-A- 1 321 641
- EP-A- 1 353 046
- PATENT ABSTRACTS OF JAPAN Bd. 2002, Nr. 04, 4. August 2002 (2002-08-04) & JP 2001 355431 A (ISUZU MOTORS LTD), 26. Dezember 2001 (2001-12-26)

## Beschreibung

Die Erfindung betrifft zunächst ein Abgassystem für eine Brennkraftmaschine, insbesondere in einem Kraftfahrzeug, mit einer ersten Filtereinrichtung und einer stromabwärts von dieser angeordneten zweiten Filtereinrichtung, welche jeweils Rußpartikel aus dem Abgas filtern, wobei mindestens die erste Filtereinrichtung ein katalytisches Material aufweist, welches eine exotherme Rußverbrennung derart fördert, dass durch die entsprechende Erwärmung des Abgases die Rußverbrennung in der zweiten Filtereinrichtung in Gang gesetzt wird. Ferner betrifft die Erfindung ein Verfahren zum Betreiben eines entsprechenden Abgassystems.

Ein Abgassystem und ein Verfahren der eingangs genannten Art sind aus der DE 101 56 191 A1 bekannt. Dort ist ein Abgassystem gezeigt, welches eine Hauptfiltereinrichtung und eine dieser vorgelagerte Vorfiltereinrichtung aufweist. In der Vorfiltereinrichtung wird ebenso wie in der Hauptfiltereinrichtung Ruß aus dem Abgas gesammelt. Zur Regenerierung wird der in der Vorfiltereinrichtung gesammelte Ruß verbrannt. Hierdurch wird so viel Wärme freigesetzt, dass das durchströmende Abgas ebenfalls auf Rußzündtemperatur erwärmt wird, was zur Initiierung des Abbrennes des in der Hauptfiltereinrichtung gesammelten Rußes dient. Bekannt ist auch, die Hauptfiltereinrichtung ebenso wie die Vorfiltereinrichtung mit einer katalytischen Beschichtung zu versehen, durch welche die Zündtemperatur des Rußes herabgesetzt wird. Zur Erwärmung des in der Vorfiltereinrichtung gesammelten Rußes ist eine. Heizvorrichtung vorgesehen, beispielsweise ein in den Filterkörper der Vorfiltereinrichtung ragendes Heizelement, oder ein externer Brenner, durch den ein heißes Gas erzeugt wird.

Ein Problem ist jedoch, dass viele die Rußverbrennung fördernde katalytische Materialien bei der Filterstruktur, auf die sie aufgebracht sind, zu Korrosionsproblemen führen. Dies macht es erforderlich, spezielle Filtermaterialien zu verwenden, was die Herstellkosten erhöht.

Aufgabe der vorliegenden Erfindung ist es daher, ein Abgassystem und ein Verfahren der eingangs genannten Art so weiterzubilden, dass das Abgassystem möglichst preiswert hergestellt werden kann.

Diese Aufgabe wird bei einem Abgassystem der eingangs genannten Art dadurch gelöst, dass die Materialien der beiden Filtereinrichtung so gewählt sind, dass die Rußverbrennung in der ersten Filtereinrichtung bei niedrigerer Temperatur einsetzt und/oder bei ähnlicher Temperatur stärker ist als in der zweiten Filtereinrichtung. Bei einem Verfahren der eingangs genannten Art wird die gestellte Aufgabe entsprechend gelöst.

### Vorteile der Erfindung

Für viele die Rußverbrennung fördernde katalytische Materialien gilt, dass deren korrosive Aggressivität mit der Stärke der katalytischen Eigenschaft zunimmt. Da erfindungsgemäß die katalytische Aktivität in der zweiten Filtereinrichtung geringer ist als in der ersten Filtereinrichtung, ist auch die korrosive Aktivität in der zweiten Filtereinrichtung verringert, so dass dort ein preiswerteres Träger- beziehungsweise Filtermaterial' eingesetzt werden kann. Hierdurch werden die Herstellkosten des Abgassystems reduziert.

Dadurch, dass die katalytische Aktivität der ersten Filtereinrichtung stärker ist als in der zweiten Filtereinrichtung, kann dort eine Rußverbrennung bereits mit vergleichsweise geringem Energieeinsatz in Gang gebracht werden. Durch die Rußverbrennung, einer exothermen Reaktion, wird das durch die erste Filtereinrichtung strömende Abgas so stark erwärmt, dass auch in der zweiten Filtereinrichtung die dort höhere Rußzündtemperatur erreicht und der dort angesammelte Ruß oxidiert werden kann. Bei dem erfindungsgemäßen Abgassystem und dem erfindungsgemäßen Verfahren ist somit trotz geringerer Herstellkosten eine zuverlässige Regenerierung der ersten sowie der zweiten Filtereinrichtung möglich.

Besonders sinnvoll ist das erfindungsgemäße Abgassystem dann, wenn die erste Filtereinrichtung einen Filterwirkungsgrad von höchstens 90% aufweist, da dann in ausreichendem Maße Rußpartikel in der zweiten Filtereinrichtung gesammelt und verbrannt werden können.

Vorteilhafte Weiterbildungen der Erfindung sind in Unteransprüchen angegeben.

So wird beispielsweise vorgeschlagen, dass in der zweiten Filtereinrichtung kein die Rußverbrennung förderndes katalytisches Material vorhanden ist. Dies ermöglicht nicht nur die Verwendung eines vergleichsweise preiswerten Materials für die Struktur der zweiten Filtereinrichtung, sondern es entfällt auch der vergleichsweise aufwändige Beschichtungsvorgang mit einem katalytischen Material, was zusätzlich Kosten spart. Darüber hinaus wird eine Beschädigung der Filterstruktur durch eine übermäßig starke Rußverbrennung vermieden. Da die "Zündtemperatur" in der zweiten Filtereinrichtung dann jedoch vergleichsweise hoch liegt, muss ein entsprechend aktives katalytisches Material in der ersten Filtereinrichtung verwendet werden, um mit vertretbarem Energieeinsatz die notwendige Erwärmung des Abgases zu erzielen.

Besonders vorteilhaft ist es, wenn die erste Filtereinrichtung einen Tiefenfilter, vorzugsweise aus einem offenporigen Keramikschaum, und die zweite Filtereinrichtung einen Oberflächenfilter, vorzugsweise aus Metall, stärker bevorzugt aus Edelstahl, umfasst. Auf Grund der großen wirksamen Oberfläche kann mit einem Tiefenfilter eine besonders gute katalytische Wirkung erzielt werden. Dies gilt insbesondere bei der Verwendung sogenannter "Molten Salt-Katalysatoren", welche in dem betrachteten Betriebsbereich flüssig vorliegen. Ein Oberflächenfilter wiederum hat eine sehr gute Filterwirkung und kann aus Metall, insbesondere aus Edelstahl, preiswert hergestellt werden, bei gleichzeitig guter Hochtemperatur- und Thermoschockbeständigkeit.

Eine weitere vorteilhafte Ausgestaltung des erfindungsgemäßen Abgassystems zeichnet sich dadurch aus, dass die erste Filtereinrichtung so ausgebildet ist, dass die zweite Filtereinrichtung ein katalytisches Material umfasst, welches die Oxidation von CO zu CO₂ und/oder die Oxidation von NO zu NO₂ fördert. Durch die ebenfalls exotherme Oxidationsreaktion von CO zu CO₂ in der zweiten Filtereinrichtung wird zusätzlich Wärme freigesetzt, welche zum Erreichen der für den Rußabbrand in der zweiten Filtereinrichtung erforderlichen Zündtemperatur beiträgt. Die Zündtemperatur in der zweiten Filtereinrichtung muss somit nicht allein über die Erwärmung des Abgases bewerkstelligt werden. Diese Ausgestaltung hat ferner dann, wenn in der zweiten Filtereinrichtung kein die Rußverbrennung förderndes katalytisches Material vorhanden ist, den Vorteil der räumlichen Trennung der verschiedenen Oxidationsverfahren. Hierdurch werden unerwünschte Wechselwirkungen verhindert.

Ein einfach zu verarbeitendes katalytisches Material, welches die Oxidation von CO und von NO fördert, ist Platin sowie Palladium. Diese Materialien können auf einem oberflächenreichen Oxid oder direkt auf einem Filterkörper geträgert sein, was die Herstellkosten niedrig hält.

Besonders vorteilhaft ist es, wenn die erste Filtereinrichtung die zweite Filtereinrichtung zueinander unmittelbar benachbart angeordnet sind. Hierdurch wird verhindert, dass sich das bei der Rußverbrennung in der ersten Filtereinrichtung erwärmte Abgas auf dem Weg zur zweiten Filtereinrichtung allzu sehr abkühlt. Bei dieser Ausgestaltung des erfindungsgemäßen Abgassystems ist also der Wirkungsgrad der Rußverbrennung besonders hoch. Dabei können die erste Filtereinrichtung und die zweite Filtereinrichtung in eine Filtereinheit integriert sein, die beispielsweise in einem gemeinsamen Gehäuse untergebracht ist. Möglich ist sogar, einen einzigen Filter in seinem stromaufwärtigen Bereich entsprechend der ersten Filtereinrichtung und in seinem stromabwärtigen Bereich entsprechend der zweiten Filtereinrichtung auszugestalten. Dies führt zu einer besonders kompakten Bauweise.

Um die erfindungsgemäß vorgesehene hohe katalytische Aktivität in der ersten Filtereinrichtung sicherzustellen, kann ein katalytisches Material verwendet werden, welches. Mitglied der folgenden Gruppe ist: 1 bis 50 Gew.% Ag auf einem oxidischen Träger, und/oder V und/oder Mo und/oder W und/oder Mn und/oder Cu auf einem oxidischen Träger, wobei der Träger umfasst : Al₂O₃, TiO₂, CeO₂, ZrO₂, und/oder SiO₂; Ag in chemischer Verbindung mit Oxiden von Ti, Zr, Hf, V, Nb, Ta, Cr, Mo, W, Mn, Re, Al, und/oder Zr, insbesondere Ag₂CrO₄ oder AgMn₂O₅; Metall-Vanadat; Molybdat; Wolframate; Metall-V-Mischoxid, insbesondere Cs₂V₂O₄; Cr-Mischoxid; Mo-Mischoxid; Manganoxid; Rheniumoxid; Metallmanganat; Metallrhenat.

Bei einer vorteilhaften Weiterbildung des erfindungsgemäßen Verfahrens wird vorgeschlagen, dass zur Regenerierung der Filtereinrichtungen die Abgastemperatur stromaufwärts von der ersten Filtereinrichtung auf ein erstes Niveau erhöht wird, bei dem in der ersten Filtereinrichtung die Rußverbrennung in einem solchen Umfang einsetzt, dass hierdurch die Abgastemperatur zusätzlich auf ein zweites Niveau erhöht wird, bei dem in der zweiten Filtereinrichtung ebenfalls die Rußverbrennung in Gang gesetzt wird. Ein auf diese Weise betriebenes Abgassystem kann sehr preiswert hergestellt werden, da auf die Verwendung einer separaten Heizvorrichtung, mit der die erste Filtereinrichtung auf die für die Rußverbrennung erforderliche Zündtemperatur erhitzt wird, verzichtet werden kann. Stattdessen wird die Rußverbrennung durch motorische Maßnahmen in Gang gesetzt.

### Zeichnungen

Nachfolgend werden besonders bevorzugte Ausführungsbeispiele der vorliegenden Erfindung unter Bezugnahme auf die beiliegende Zeichnung näher erläutert. In der Zeichnung zeigen:
- Figur 1: eine schematische Darstellung einer Brennkraftmaschine mit einem Abgassystem mit einer ersten und einer zweiten Filtereinrichtung;
- Figur 2: eine vergrößerte Darstellung der ersten und zweiten Filtereinrichtung von Figur 1;
- Figur 3: ein Detailausschnitt der ersten Filtereinrichtung von Figur 1;
- Figur 4: ein Detailausschnitt der zweiten Filtereinrichtung von Figur 1 und
- Figur 5: eine Darstellung ähnlich Figur 1 einer alternativen Ausführungsform eines Abgassystems.

### Beschreibung der Ausführungsbeispiele

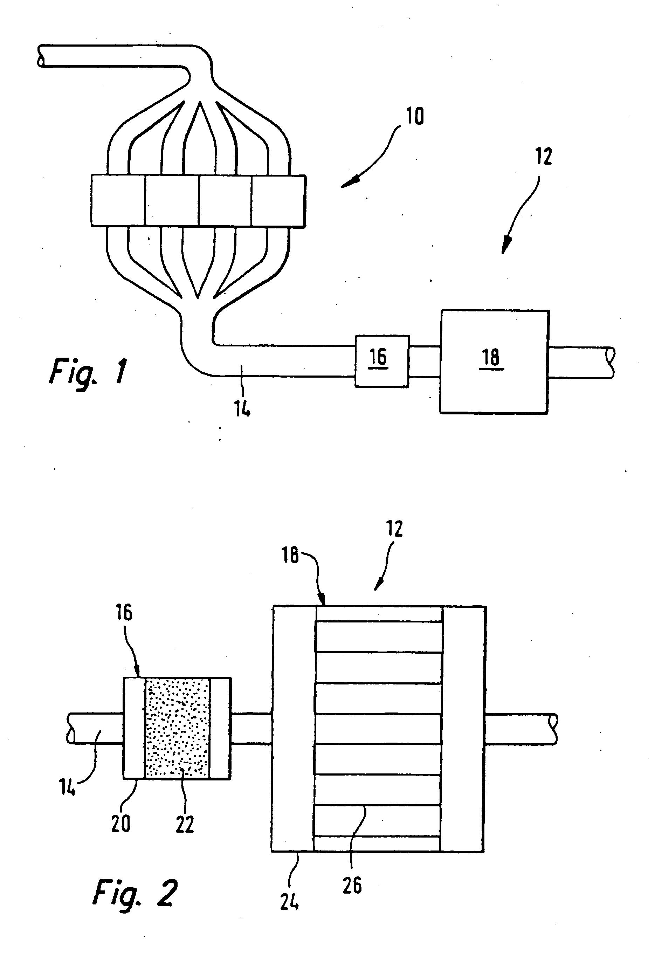

In Figur 1 ist ein Abgassystem einer Brennkraftmaschine 10 mit dem Bezugszeichen 12 bezeichnet. Es umfasst ein Abgasrohr 14, welches die Verbrennungsabgase zunächst einer ersten Filtereinrichtung 16 und danach einer zweiten Filtereinrichtung 18 zuführt. Die Brennkraftmaschine 10 arbeitet nach dem Dieselprinzip. Bei der Verbrennung entstehende Rußpartikel werden zumindest zum Teil in den beiden Filtereinrichtungen 16 und 18 aus dem Abgas herausgefiltert.

Wie aus Figur 2 hervorgeht, umfasst die erste Filtereinrichtung 16 ein Gehäuse 20, in dem eine Filterstruktur in Form eines offenporigen Keramik- oder Metallschaums 22 angeordnet ist. Bei der ersten Filtereinrichtung 16 handelt es sich also um einen Tiefenfilter. Die zweite Filtereinrichtung 18 umfasst ebenfalls ein Gehäuse 24, in dem eine Filterstruktur 26 in Form von wechselseitig verschlossenen Waben oder Kanälen 28 angeordnet ist.

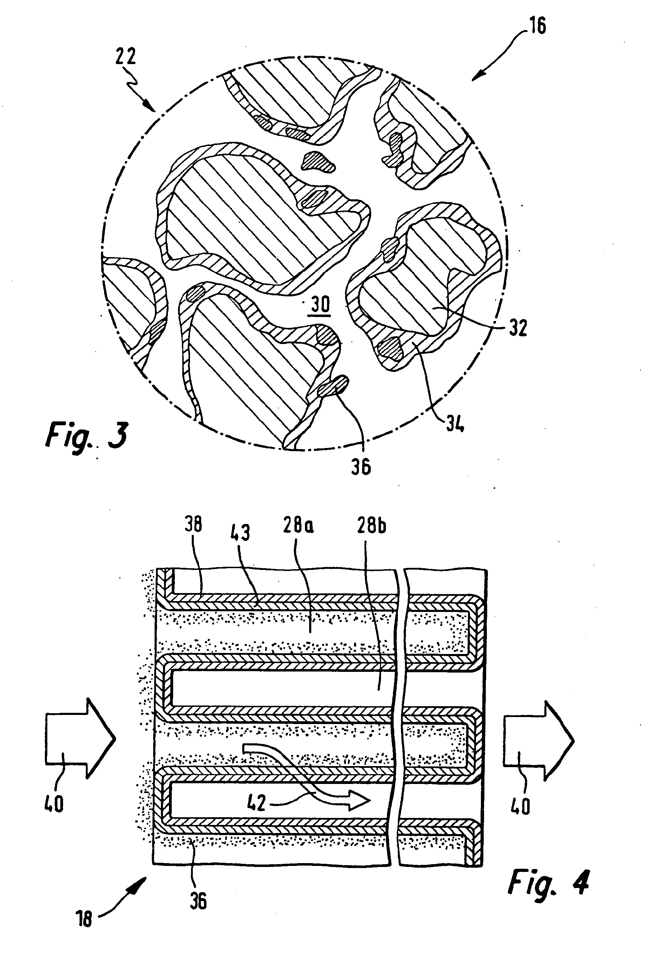

Ein Ausschnitt eines inneren Bereichs der Filterstruktur 22 der ersten Filtereinrichtung 16 ist in Figur 3 gezeigt. Danach weist diese Filterstruktur 22 Poren 30 auf, die in dem Material der Filterstruktur 22 vorhanden sind. Dieses Material ist in Figur 3 mit 32 bezeichnet. Vorliegend handelt es sich hierbei um Siliziumcarbid. Grundsätzlich kommen für die Filterstruktur 22 der ersten Filtereinrichtung 16 jedoch alle offenporösen Körper und Schüttungen aus keramischem und metallischem Material beziehungsweise Kombinationen aus beidem in Betracht, welche dazu geeignet sind, Rußpartikel aus dem Abgas, welches durch das Abgasrohr 14 strömt, herauszufiltern.

Wie ebenfalls aus Figur 3 hervorgeht, ist das Siliziumcarbidmaterial 32 der Filterstruktur 22 der ersten Filtereinrichtung 16 mit einem katalytischen Material 34 versehen. Dieses ist so gewählt, dass es die Oxidation beziehungsweise Verbrennung von in der ersten Filtereinrichtung 16 angesammelten Rußpartikeln (Bezugszeichen 36 in Figur 3) bei vergleichsweise niedrigen Temperaturen fördert. Durch eine solche Rußverbrennung wird verhindert, dass die erste Filtereinrichtung 16 mit der Zeit verstopft.

Das in der ersten Filtereinrichtung 16 verwendete katalytische Material 34 ist im Hinblick auf die Förderung der Rußverbrennung hoch aktiv und senkt die Zündtemperatur, bei welcher die exotherme Rußverbrennung in der ersten Filtereinrichtung 16 in Gang gesetzt wird, um 100 bis 250 K oder sogar noch mehr. Besonders vorteilhaft ist es auch, wenn das katalytische Material 34 die Rußverbrennung derart fördert, dass auch CO.gebildet wird (siehe weiter unten).

Bei der in Figur 4 im Detail gezeigten zweiten Filtereinrichtung 18 handelt es sich um einen Oberflächenfilter, der vorliegend als Wandflussfilter ausgebildet ist. Dieser weist eine in Strömungsrichtung gesehene wabenartige Filterstruktur 38 auf, welche aus Edelstahl hergestellt ist. Einige der Waben sind auf der zur Brennkraftmaschine 10 weisenden Seite offen und auf der von der Brennkraftmaschine 10 abgewandten Seite geschlossen (der Abgasstrom ist in Figur 4 durch Pfeile 40 angedeutet). Diese Waben tragen in Figur 4 das Bezugszeichen 28a. Andere, zu den Waben 28a benachbarte Waben 28b sind auf der der Brennkraftmaschine 10 zugewandeten Seite geschlossen und auf der von der Brennkraftmaschine 10 abgewandten Seite offen.

Die Filterwirkung ergibt sich durch die Porosität der zwischen den Waben 28a und 28b liegenden Wände der Filterstruktur 38. Der Abgasstrom tritt also durch die Wandflächen von den Waben 28a in die Waben 28b, entsprechend dem Pfeil 42 in Figur 4. Der Filterwirkungsgrad der zweiten Filtereinrichtung 18 liegt bei ungefähr 95% bis 99%. Die Filterwirkung ist so gewählt, dass vorzugsweise kleine Rußpartikel aus dem Abgasstrom herausgefiltert werden. Der Filterwirkungsgrad der ersten Filtereinrichtung 16 liegt bei ungefähr 50%. Durch diese Filtereinrichtung 16 werden vorzugsweise große Rußpartikel aus dem Abgasstrom herausgefiltert. Insgesamt ergibt sich so ein Wirkungsgrad von über 99%.

Im Laufe der Zeit lagern sich in der ersten Filtereinrichtung 16 und der zweiten Filtereinrichtung 18 immer mehr Rußpartikel 36 ab. Um ein Verstopfen des Abgassystems 12 zu verhindern, wird von Zeit zu Zeit durch motorische Maßnahmen die Temperatur des von der Brennkraftmaschine 10 in das Abgasrohr 14 strömenden Abgases erhöht, und zwar auf eine Temperatur im Bereich von 350 bis ungefähr 550°C.

Zwar findet normalerweise eine Rußverbrennung in relevantem Umfange erst ab Temperaturen von ungefähr 600°C statt. Auf Grund des Vorhandensein des katalytischen Materials 34 in der ersten Filtereinrichtung 16 reicht das besagte Temperaturniveau des Abgases jedoch aus, um in der ersten Filtereinrichtung 16 die Verbrennung der angelagerten Rußpartikel 36 in Gang zu bringen. Die hierfür erforderliche Minimaltemperatur wird auch als "Zündtemperatur" bezeichnet. Bei der Verbrennung der angelagerten Rußpartikel handelt es sich um eine exotherme Oxidationsreaktion. Durch die hierdurch frei werdende Energie wird das durch die erste Filtereinrichtung 16 strömende Abgas erwärmt.

Auf Grund der hohen katalytischen Aktivität des katalytischen Materials 34 in der ersten Filtereinrichtung 16 ist die einsetzende exotherme Reaktion bei dem erreichten Temperaturniveau des Abgases sehr stark, was zu einer entsprechend starken Erhöhung der Temperatur des von der ersten Filtereinrichtung 16 zur zweiten Filtereinrichtung 18 strömenden Abgases führt. Eine typische Temperatur des von der ersten Filtereinrichtung 16 zur zweiten Filtereinrichtung 18 strömenden Abgases liegt bei ablaufender Rußverbrennung in der ersten Filtereinrichtung 16 bei ungefähr 600 bis 700°C. Diese Temperatur liegt oberhalb der Zündtemperatur der Rußpartikel 36 in der zweiten Filtereinrichtung 18, in der kein die Rußverbrennung förderndes katalytisches Material vorhanden ist. Somit wird auch in der zweiten Filtereinrichtung 18 die Rußverbrennung der angelagerten Rußpartikel 36 in Gang gebracht.

Durch die Rußverbrennung in der ersten Filtereinrichtung 16, welche auf Grund der Verwendung eines speziellen und hochaktiven katalytischen Materials 34 nach erfolgter Zündung rasch und unter hoher Energieabgabe abläuft, wird also die Abgastemperatur derart gesteigert, dass die in der zweiten Filtereinrichtung 18 befindlichen Rußpartikel 36 selbst zünden. Dieser Effekt wird bei dem in Figur 4 gezeigten Ausführungsbeispiel noch dadurch gesteigert, dass auch die Filterstruktur 38 der zweiten Filtereinrichtung 18 mit einem katalytischen Material 43 versehen ist, welches jedoch von ganz anderer Art ist als das katalytische Material 34 der ersten Filtereinrichtung 16:

Bei der Rußverbrennung in der ersten Filtereinrichtung 16 wird nämlich auch CO frei, welches nun in der zweiten Filtereinrichtung 18 dank des dort vorhandenen katalytischen Materials 43 zu CO₂ oxidiert wird. Bei dieser Oxidation handelt es sich ebenfalls um eine exotherme Reaktion, bei welcher also Wärme freigesetzt wird. Diese Energie kann zum Erreichen der Zündtemperatur in der zweiten Filtereinrichtung 18 verwendet werden, was wiederum die Verwendung eines weniger aktiven katalytischen Materials 34 in der ersten Filtereinrichtung 16 oder von insgesamt weniger katalytischem Material 34 in der ersten Filtereinrichtung 16 möglich macht. Als katalytisches Material 43 in der zweiten Filtereinrichtung 18 kommt beispielsweise Platin oder Palladium in Frage. Dieses kann auf einem oberflächenreichen Oxid geträgert sein oder sich direkt auf der Filterstruktur 38 aus Edelstahl befinden.

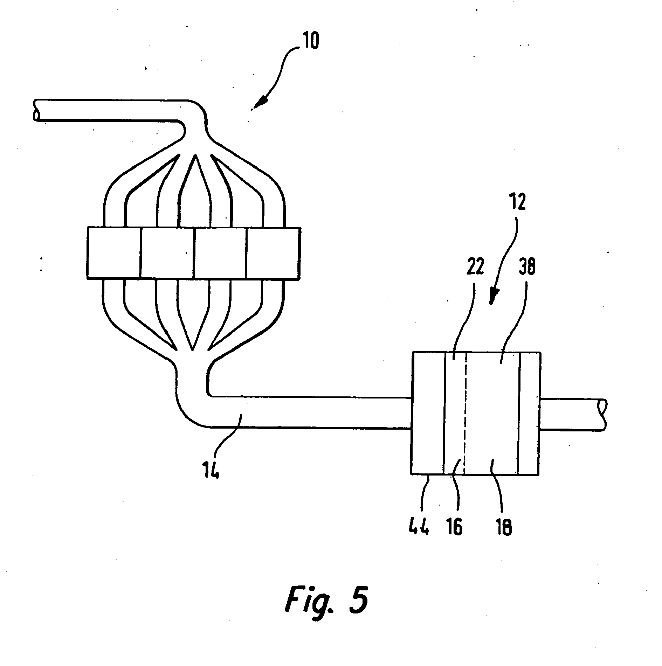

Wie aus Figur 1 hervorgeht, sind die erste Filtereinrichtung 16 und die zweite Filtereinrichtung 18 zueinander unmittelbar benachbart angeordnet. Hierdurch wird verhindert, dass sich das bei der Rußverbrennung in der ersten Filtereinrichtung 16 erwärmte Abgas auf seinem Weg zur zweiten Filtereinrichtung 18 allzu sehr abkühlt. In dieser Hinsicht optimal ist jene Ausführungsform gemäß Figur 5, bei der die erste Filtereinrichtung 16 und die zweite Filtereinrichtung 18 in eine Filtereinheit 44 integriert sind. Dabei sei darauf hingewiesen, dass in Figur 5 solche Bereiche und Elemente, welche äquivalente Funktionen zu Elementen und Bereichen der vorhergehenden Figuren haben, die gleichen Bezugszeichen tragen und nicht nochmals im Detail erläutert sind. Man erkennt aus Figur 5, dass die Filterstruktur 22 der ersten Filtereinrichtung 16 einstückig ist mit der Filterstruktur 38 der zweiten Filtereinrichtung 18 (die Trennlinie zwischen den beiden Filterstrukturen ist gestrichelt gezeichnet). Die erste Filtereinrichtung 16 unterscheidet sich von der zweiten Filtereinrichtung 18 demnach nur dadurch, dass sie ein in Figur 5 nicht gezeigtes katalytisches Material umfasst, welches besonders aktiv ist und die Rußverbrennung in der ersten Filtereinrichtung 16 fördert.

## Patentansprüche

1. Abgassystem (12) für eine Brennkraftmaschine (10), insbesondere in einem Kraftfahrzeug, mit einer ersten Filtereinrichtung (16) und einer stromabwärts von dieser angeordneten zweiten Filtereinrichtung (18), welche jeweils Rußpartikel (36) aus dem Abgas filtern, wobei mindestens die erste Filtereinrichtung (16) ein katalytisches Material (34) aufweist, welches eine exotherme Rußverbrennung derart fördert, dass durch die entsprechende Erwärmung des Abgases die Rußverbrennung in der zweiten Filtereinrichtung (18) in Gang gesetzt wird, **dadurch gekennzeichnet, dass** die Materialien der beiden Filtereinrichtungen (16, 18) so gewählt sind, dass die Rußverbrennung in der ersten Filtereinrichtung (16) bei niedrigerer Temperatur einsetzt und/oder bei ähnlicher Temperatur stärker ist als in der zweiten Filtereinrichtung (18).

2. Abgassystem (12) nach Anspruch 1, **dadurch gekennzeichnet, dass** in der zweiten Filtereinrichtung (18) wenigstens im Wesentlichen kein die Rußverbrennung förderndes katalytisches Material vorhanden ist.

3. Abgassystem (12) nach einem der Ansprüche 1 oder 2, **dadurch gekennzeichnet, dass** die erste Filtereinrichtung (16) einen Tiefenfilter (26), vorzugsweise aus einem offenporigen Keramikschaum (32), und die zweite Filtereinrichtung (18) einen Oberflächenfilter (38), vorzugsweise aus Metall, stärker bevorzugt aus Edelstahl, umfasst.

4. Abgassystem nach einem der vorhergehenden Ansprüche, **dadurch gekennzeichnet, dass** die zweite Filtereinrichtung (18) ein katalytisches Material (43) umfasst, welches die Oxidation von CO zu CO₂ und/oder die Oxidation von NO zu NO₂ fördert.

5. Abgassystem (12) nach einem der Ansprüche 4 oder 5, **dadurch gekennzeichnet, dass** die zweite Filtereinrichtung (18) ein katalytisches Material (43) umfasst, welches Platin und/oder Palladium umfasst.

6. Abgassystem (12) nach Anspruch 6, **dadurch gekennzeichnet, dass** das katalytische Material (43) auf einem oberflächenreichen Oxid oder direkt auf einem Filterkörper (38) geträgert ist.

7. Abgassystem (12) nach einem der vorhergehenden Ansprüche, **dadurch gekennzeichnet, dass** die erste Filtereinrichtung (16) und die zweite Filtereinrichtung (18) zueinander unmittelbar benachbart angeordnet sind.

8. Abgassystem (12) nach einem der vorhergehenden Ansprüche, **dadurch gekennzeichnet, dass** die erste Filtereinrichtung (16) und die zweite Filtereinrichtung (18) in eine Filtereinheit (44) integriert sind.

9. Abgassystem (12) nach einem der vorhergehenden Ansprüche, **dadurch gekennzeichnet, dass** die erste Filtereinrichtung (16) mindestens ein katalytisches Material (34) umfasst, welches Mitglied der folgenden Gruppe ist: 1 bis 50 Gew.% Ag auf einem oxidischen Träger, und/oder V und/oder Mo und/oder W und/oder Mn und/oder Cu auf einem oxidischen Träger, wobei der Träger umfasst: Al₂O₃, TiO₂, CeO₂, ZrO₂, und/oder SiO₂; Ag in chemischer Verbindung mit Oxiden von Ti, Zr, Hf, V, Nb, Ta, Cr, Mo, W, Mn, Re, Al, und/oder Zr, insbesondere Ag₂CrO₄ oder AgMn₂O₅; Metall-Vanadat; Molybdat; Wolframate; Metall-V-Mischoxid, insbesondere Cs₂V₂O₄; Cr-Mischoxid; Mo-Mischoxid; Manganoxid; Rheniumoxid; Metallmanganat; Metallrhenat.

10. Verfahren zum Betreiben eines Abgassystems (12) für eine Brennkraftmaschine (10), insbesondere in einem Kraftfahrzeug, mit einer ersten Filtereinrichtung (16) und einer stromabwärts von dieser angeordneten zweiten Filtereinrichtung (18), welche jeweils Rußpartikel (36) aus dem Abgas filtern, wobei mindestens die erste Filtereinrichtung (16) ein katalytisches Material (34) aufweist, welches eine exotherme Rußverbrennung derart fördert, dass durch die entsprechende Erwärmung des Abgases die Rußverbrennung in der zweiten Filtereinrichtung (18) in Gang gesetzt wird, **dadurch gekennzeichnet, dass** die Rußverbrennung in der ersten Filtereinrichtung (16) bei niedrigerer Temperatur einsetzt und/oder bei ähnlicher Temperatur stärker ist als in der zweiten Filtereinrichtung (18).

11. Verfahren nach Anspruch 11, **dadurch gekennzeichnet, dass** zur Regenierung der Filtereinrichtungen (16, 18) die Abgastemperatur stromaufwärts von der ersten Filtereinrichtung (16) auf ein erstes Niveau erhöht wird, bei dem in der ersten Filtereinrichtung (16) eine Rußverbrennung in einem solchen Umfang einsetzt, dass hierdurch die Abgastemperatur zusätzlich auf ein zweites Niveau erhöht wird, bei dem in der zweiten Filtereinrichtung (18) ebenfalls eine Rußverbrennung in Gang gesetzt wird.

## Claims

1. Exhaust system (12) for an internal combustion engine (10), in particular in a motor vehicle, having a first filter device (16) and having a second filter device (18) which is arranged downstream of said first filter device (16), which filter devices in each case filter soot particles (36) out of the exhaust gas, with at least the first filter device (16) having a catalytic material (34) which promotes an exothermic soot combustion in such a way that, as a result of the corresponding heating of the exhaust gas, the soot combustion in the second filter device (18) is initiated, **characterized in that** the materials of the two filter devices (16, 18) are selected such that the soot combustion in the first filter device (16) sets in at a lower temperature, and/or is more intense at a similar temperature than in the second filter device (18).

2. Exhaust system (12) according to Claim 1, **characterized in that** at least substantially no catalytic material which promotes the soot combustion is present in the second filter device (18).

3. Exhaust system (12) according to one of Claims 1 or 2, **characterized in that** the first filter device (16) comprises a deep-bed filter (26), preferably composed of an open-pored ceramic foam (32), and the second filter device (18) comprises a surface filter (38), preferably composed of metal, more preferably composed of noble steel.

4. Exhaust system according to one of the preceding claims, **characterized in that** the second filter device (18) comprises a catalytic material (43) which promotes the oxidation of CO to form CO₂ and/or the oxidation of NO to form NO₂.

5. Exhaust system (12) according to one of Claims 4 or 5, **characterized in that** the second filter device (18) comprises a catalytic material (43) which comprises platinum and/or palladium.

6. Exhaust system (12) according to Claim 6, **characterized in that** the catalytic material (43) is supported on a high-surface-area oxide or directly on a filter body (38).

7. Exhaust system (12) according to one of the preceding claims, **characterized in that** the first filter device (16) and the second filter device (18) are arranged directly adjacent to one another.

8. Exhaust system (12) according to one of the preceding claims, **characterized in that** the first filter device (16) and the second filter device (18) are integrated into a filter unit (44).

9. Exhaust system (12) according to one of the preceding claims, **characterized in that** the first filter device (16) comprises at least one catalytic material (34) which is a member of the following group: 1 to 50 % by weight Ag on an oxidic support, and/or V and/or Mo and/or W and/or Mn and/or Cu on an oxidic support, with the support comprising: Al₂O₃, TiO₂, CeO₂, ZrO₂ and/or SiO₂; Ag in a chemical compound with oxides of Ti, Zr, Hf, V, Nb, Ta, Cr, Mo, W, Mn, Re, Al and/or Zr, in particular Ag₂CrO₄ or AgMn₂O₅; metal vanadate; molybdate; tungstate; metal-V mixed oxides, in particular Cs₂V₂O₄; Cr mixed oxides; Mo mixed oxides; manganous oxide; rhenium oxide; metal manganate; metal rhenate.

10. Method for operating an exhaust system (12) for an internal combustion engine (10), in particular in a motor vehicle, having a first filter device (16) and having a second filter device (18) which is arranged downstream of said first filter device (16), which filter devices in each case filter soot particles (36) out of the exhaust gas, with at least the first filter device (16) having a catalytic material (34) which promotes an exothermic soot combustion in such a way that, as a result of the corresponding heating of the exhaust gas, the soot combustion in the second filter device (18) is initiated, **characterized in that** the soot combustion in the first filter device (16) sets in at a lower temperature, and/or is more intense at a similar temperature, than in the second filter device (18).

11. Method according to Claim 11, **characterized in that**, in order to regenerate the filter devices (16, 18), the exhaust gas temperature upstream of the first filter device (16) is increased to a first level at which soot combustion sets in in the first filter device (16) to such an extent that, as a result, the exhaust gas temperature is additionally increased to a second level at which soot combustion is likewise initiated in the second filter device (18).

## Revendications

1. Système d'échappement (12) pour moteur à combustion interne (10), notamment pour un véhicule automobile, comportant une première installation de filtre (16) et en aval de celle-ci une seconde installation de filtre (18) séparant chacune les particules (36) des gaz d'échappement,
au moins la première installation de filtre ('16) ayant une matière catalytique (34) favorisant une combustion exothermique des particules de noir de fumées de façon que le réchauffement correspondant des gaz d'échappement mette en oeuvre la combustion des particules dans la seconde installation de filtre (18),
**caractérisé en ce que**
les matières des deux installations de filtre (16, 18) sont choisies pour que la combustion des particules de noir de fumées dans la première installation de filtre (16) se fasse à une température plus faible et/ou pour une température analogue, que la combustion soit plus forte que dans la seconde installation de filtre (18).

2. Système d'échappement (12) selon la revendication 1,
**caractérisé en ce que**
dans la seconde installation de filtre (18), il n'y a pratiquement pas de matière catalytique favorisant la combustion des particules de noir de fumées.

3. Système d'échappement (12) selon l'une des revendications 1 ou 2,
**caractérisé en ce que**
la première installation de filtre (16) comporte un filtre en profondeur (26), de préférence en une mousse de céramique (32) à pores ouverts et la seconde installation de filtre (18) comporte un filtre de surface (38), de préférence en métal et en particulier en acier inoxydable.

4. Système d'échappement selon l'une des revendications précédentes,
**caractérisé en ce que**
la seconde installation de filtre (18) comporte une matière catalytique (43) qui favorise l'oxydation de CO en CO₂ et/ou l'oxydation de NO en NO₂.

5. Système d'échappement (12) selon l'une des revendications 4 ou 5,
**caractérisé en ce que**
la seconde installation de filtre (18) comprend une matière catalytique (43) avec du platine et/ ou du palladium.

6. Système d'échappement (12) selon la revendication 5,
**caractérisé en ce que**
la matière catalytique (43) est appliquée sur une couche d'oxyde à surface superficielle importante ou directement sur un corps de filtre (38).

7. Système d'échappement (12) selon l'une des revendications précédentes,
**caractérisé en ce que**
la première installation de filtre (16) et la seconde installation de filtre (18) sont directement voisines.

8. Système d'échappement (12) selon l'une des revendications précédentes,
**caractérisé en ce que**
la première installation de filtre (16) et la seconde installation de filtre (18) sont intégrées dans une unité de filtre (44).

9. Système d'échappement (12) selon l'une des revendications précédentes,
**caractérisé en ce que**
la première installation de filtre (16) comporte au moins une matière catalytique (34) qui fait partie du groupe suivant : entre 1 et 50 % en poids Ag sur un support oxydant et/ou V et/ou Mo et/ou W et/ou Mn et/ou Cu sur un support oxydant, le support comprenant Al₂O₃, TiO₂, CeO₂, ZrO₂, et/ou SiO₂ ; Ag, dans des combinaisons chimiques avec des oxydes de Ti, Zr, Hf, V, Nb, Ta, Cr, Mo, W, Mn, Re, Al et/ou Zr, notamment Ag₂CrO₄ ou AgMn₂O₅, un vanadate métallique, un molybdate, un wolframate, un oxyde mélangé métal-V, notamment Cs₂V₂O₄, un oxyde mélangé Cr ; un oxyde mélangé Mo, de l'oxyde de manganèse, de l'oxyde de rhénium, un manganate métallique, un rhénate métallique.

10. Procédé de gestion d'un système d'échappement (12) d'un moteur à combustion interne (10), notamment dans un véhicule automobile, comportant une première installation de filtre (16) et en aval ce celle-ci, une seconde installation de filtre (18) filtrant chacune les particules de noir de fumées (36) des gaz d'échappement,
au moins la première installation de filtre (16) ayant une matière catalytique (34) favorisant une combustion exothermique des particules de noir de fumées de façon que le réchauffement correspondant des gaz d'échappement mette en oeuvre la combustion des particules de noir de fumées dans la seconde installation de filtre (18),
**caractérisé en ce que**
la combustion des particules de noir de fumées se produit dans la première installation de filtre (16) à une température faible et/ou à température analogue mais avec une combustion plus forte que dans la seconde installation de filtre (18).

11. Procédé selon la revendication 10,
**caractérisé en ce que**
pour régénérer les installations de filtre (16, 18), on augmente la température des gaz d'échappement en amont de la première installation de filtre (16) jusqu'à un premier niveau pour lequel dans la première installation de filtre (16) on a une combustion de particules de noir de fumées telle que la température des gaz d'échappement soit relevée en plus à un second niveau pour lequel la combustion des particules de noir de fumées se produit également dans la seconde installation de filtre (18).
